# FASCICULE DE BREVET EUROPEEN

(11) **EP 3 074 809 B1**
(45) Date de publication et mention de la délivrance du brevet: **13.02.2019**
(21) Numéro de dépôt: 14800102.7
(22) Date de dépôt: 21.11.2014
(51) Int. Cl.: G02B 27/01, G02B 6/00, G02B 27/00, G02B 27/42

(54) **DISPOSITIF D'EXTENSION DE PUPILLE DE SORTIE ET VISEUR TETE HAUTE COMPORTANT CE DISPOSITIF**
VORRICHTUNG ZUR ERWEITERUNG DER AUSTRITTSPUPILLE UND SCHEINWERFERANZEIGE MIT DIESER VORRICHTUNG
DEVICE FOR EXTENDING THE EXIT PUPIL AND HEAD UP DISPLAY COMPRISING SAID DEVICE

(30) Priorité: 29.11.2013 FR 1361850
(43) Date de publication de la demande: 05.10.2016
(73) Titulaire: Commissariat à l'Energie Atomique et aux Energies Alternatives, 75015 Paris (FR)
(72) Inventeur: ROSSINI, Umberto, F-38500 Coublevie (FR)
(74) Mandataire: Cabinet Beaumont
(86) Numéro de dépôt international: PCT/EP2014/075311
(87) Numéro de publication internationale: WO 2015/078788

(56) Documents cités:
- WO-A1-2013/033274
- US-A1- 2005 286 266
- US-A1- 2006 013 015

## Description

La présente demande de brevet revendique la priorité de la demande de brevet français FR13/61850 qui sera considérée comme faisant partie intégrante de la présente description.

### Domaine

La présente demande concerne un dispositif optique d'extension de pupille de sortie. Elle vise aussi un système de projection d'image comportant ce dispositif optique, et un viseur tête haute comportant ce système de projection d'image.

### Exposé de l'art antérieur

Les viseurs tête haute, encore connus sous l'acronyme HUD, de l'anglais Head-Up Display, sont des systèmes d'affichage en réalité augmentée qui permettent de superposer une information visuelle à une scène réelle vue par un observateur. En pratique, de tels systèmes peuvent être placés dans le cockpit d'un avion ou au sein de l'habitacle d'un véhicule.

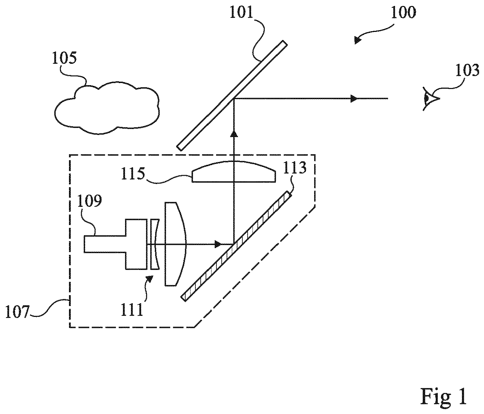

La figure 1 illustre, de façon schématique, le fonctionnement d'un viseur tête haute conventionnel 100.

Une lame semi-transparente 101 est placée entre l'oeil d'un utilisateur 103 et une scène à observer 105. Les objets de la scène à observer sont par exemple situés à l'infini ou à une distance importante de l'observateur. La lame semi-transparente 101 peut être placée selon un angle d'environ 45° par rapport à l'axe entre la scène 105 et l'observateur 103, de façon à transmettre les informations provenant de la scène 105 à l'observateur 103, sans altérer ces informations.

Pour projeter une image vue à la même distance que l'image de la scène réelle 105 et la superposer à celle-ci, un système de projection 107 est prévu. Le système 107 comprend un élément 109 d'affichage d'une image, par exemple un écran à tube cathodique, et, en regard de l'élément d'affichage 109, un système optique 111 à lentilles sphériques. En sortie du système optique 111, un faisceau lumineux de projection d'image émis par l'élément 109 est dévié d'approximativement 90 degrés, en direction de la lame semi-transparente 101, par un miroir 113 placé selon un angle d'approximativement 45 degrés par rapport à l'axe optique du système 111. Après sa réflexion sur le miroir 113, le faisceau de projection d'image traverse un système optique de sortie 115 à lentilles sphériques, avant d'atteindre la lame semi-transparente 101. Le système optique 111-115 est par exemple adapté à collimater à l'infini le faisceau lumineux de projection d'image émis par l'élément 109.

Le système de projection 107 est disposé de façon que le faisceau issu du système optique de sortie 115 atteigne la lame semi-transparente 101 du côté de l'observateur 103, perpendiculairement à l'axe entre la scène 105 et l'observateur 103. Le faisceau de projection de l'image générée par l'élément d'affichage 109 atteint ainsi la lame semi-transparente 101 avec un angle d'incidence d'approximativement 45 degrés, et la lame semi-transparente 101 réfléchit une partie du faisceau de projection d'image en direction de l'observateur.

La lame semi-transparente 101 combine l'image de la scène 105 et l'image issue du système de projection 107, d'où il résulte que l'observateur 103 visualise une image comprenant l'image projetée superposée à l'image de la scène réelle 105.

Pour visualiser l'image projetée par le système 107, l'oeil de l'observateur doit être placé dans la zone de réflexion du faisceau issu du système optique de sortie 115 sur la lame 101. Une contrainte importante à respecter est de tenir compte des mouvements possibles de la tête de l'utilisateur devant le projecteur, et donc de prévoir un faisceau en sortie du système optique 115 le plus large possible. Autrement dit, il faut prévoir un système optique 111-115 dont la pupille de sortie est de taille importante. Toutefois, les systèmes optiques à grande pupille de sortie utilisant des lentilles sphériques conventionnelles sont relativement complexes et encombrants. Or, une autre contrainte importante dans le domaine des viseurs tête haute est de prévoir des dispositifs relativement compacts, notamment lorsqu'ils sont utilisés dans des cockpits d'avion ou des habitacles automobiles de volume limité.

Le document WO 2013/033274 A1 divulgue un dispositif optique suivant le préambule de la revendication 1.

### Résumé

Un objet d'un mode de réalisation est de prévoir un viseur tête haute palliant tout ou partie des inconvénients des viseurs tête haute existants, et notamment un viseur tête haute plus simple et plus compact que les viseurs tête haute existants.

Un autre objet d'un mode de réalisation est de prévoir un système de projection d'image palliant tout ou partie des inconvénients des systèmes de projection existants, et notamment un système de projection d'image plus simple et plus compact que les systèmes de projection d'image existants.

Un autre objet d'un mode de réalisation est de prévoir un dispositif d'extension de pupille de sortie palliant tout ou partie des inconvénients des dispositifs d'extension de pupille de sortie existants, et notamment un dispositif d'extension de pupille de sortie plus simple et plus compact que les dispositifs d'extension de pupille de sortie existants.

L'invention est définie par les revendications.

Ainsi, un mode de réalisation prévoit un dispositif optique comportant : une lame transparente dont une première face est réfléchissante ; une première couche partiellement réfléchissante et partiellement transmissive revêtant une deuxième face de la lame transparente opposée à la première face ; et une deuxième couche revêtant la face de la première couche opposée à la lame transparente, la deuxième couche étant en un matériau dont l'indice optique diffère de l'indice optique de la lame transparente de moins que 10 % et de préférence de moins que 5 %, et la deuxième couche comportant, sur sa face opposée à la première couche, des structurations formant un réseau de diffraction adapté à favoriser l'extraction de lumière vers l'extérieur de la lame transparente.

Selon un mode de réalisation, la première couche présente un coefficient de transmission variant graduellement selon au moins une direction parallèle au plan de la deuxième face.

Selon un mode de réalisation, la première face de la lame transparente est revêtue d'une couche réfléchissante non transmissive.

Selon un mode de réalisation, la deuxième couche comporte, du côté de sa face opposée à la première couche, des stries à section triangulaire définissant des prismes.

Selon un mode de réalisation, la deuxième couche comprend, du côté de sa face opposée à la première couche, des structurations formant un réseau à échelettes ou réseau blazé.

Selon un mode de réalisation, la première couche est une couche métallique.

Selon un mode de réalisation, le dispositif optique comporte en outre au moins un dispositif d'injection d'un faisceau lumineux de projection d'image dans la lame transparente.

Selon un mode de réalisation, le dispositif d'injection est situé à une première extrémité de la lame transparente, et le coefficient de transmission de la première couche augmente graduellement entre la première extrémité et une deuxième extrémité de la lame transparente opposée à la première extrémité.

Selon un mode de réalisation, le dispositif optique comporte deux dispositifs d'injection situés à des extrémités opposées de la lame transparente, le coefficient de transmission de la première couche augmentant graduellement entre chacune des extrémités et une région centrale de la lame transparente.

Selon un mode de réalisation, le dispositif optique comporte deux dispositifs d'injection situés à des extrémités opposées de la lame transparente, le coefficient de transmission de la première couche étant constant.

Un autre mode de réalisation prévoit un système de projection comportant un dispositif d'affichage d'une image, et au moins un dispositif optique du type susmentionné.

Selon un mode de réalisation, le système comporte un premier dispositif optique du type susmentionné, et un deuxième dispositif optique du type susmentionné, la direction du premier dispositif étant orthogonale à la direction du deuxième dispositif.

Un autre mode de réalisation prévoit un viseur tête haute comportant un système de projection du type susmentionné et une lame semi-transparente adaptée à combiner une image projetée par le système de projection avec une image d'une scène réelle.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, précédemment décrite, est une vue en coupe schématique d'un viseur tête haute conventionnel ;
la figure 2 est une vue en perspective illustrant schématiquement un exemple d'un mode de réalisation d'un viseur tête haute ;
la figure 3 est une vue en perspective illustrant schématiquement une variante de réalisation d'un système de projection d'image ;
la figure 4 est une vue en coupe illustrant plus en détail un exemple d'un mode de réalisation d'un dispositif d'extension de pupille de sortie du viseur tête haute de la figure 2 ;
la figure 5 est une vue en coupe illustrant une variante de réalisation d'un dispositif d'extension de pupille de sortie ; et
la figure 6 est une vue en coupe illustrant une autre variante de réalisation d'un dispositif d'extension de pupille de sortie.

### Description détaillée

Par souci de clarté, de mêmes éléments ont été désignés par de mêmes références aux différentes figures. De plus, les diverses figures ne sont pas tracées à l'échelle. Par ailleurs, dans la suite de la description, sauf indication contraire, les termes "approximativement", "sensiblement", "environ", et "de l'ordre de", signifient "à 10 % près", et des références directionnelles telles que surmontant, latéral, au-dessus, en dessous, supérieur, inférieur, vertical, horizontal, etc. s'appliquent à des dispositifs et systèmes orientés de la façon illustrée dans les vues correspondantes, étant entendu que, en pratique, les dispositifs et systèmes décrits peuvent être orientés différemment.

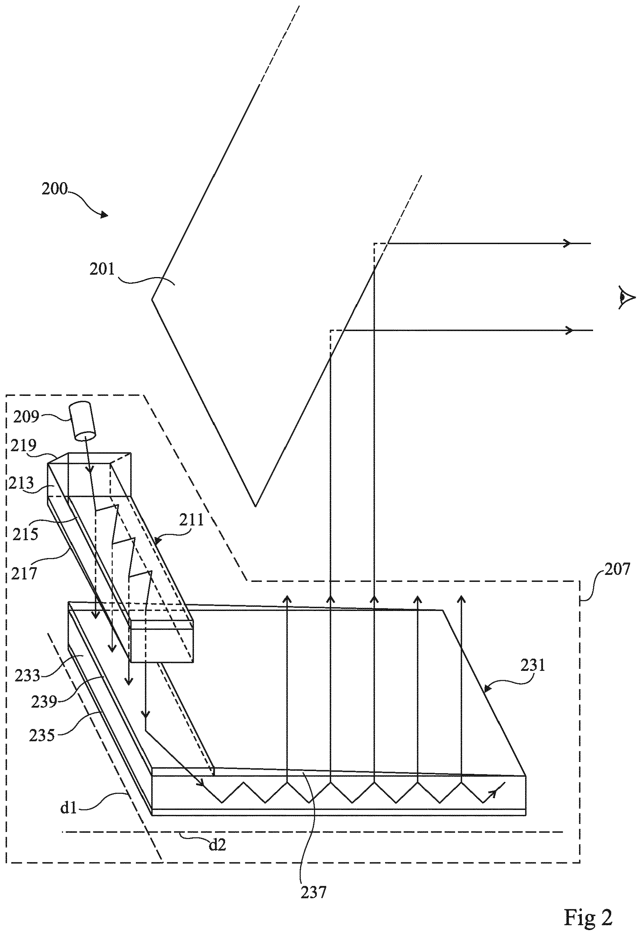

La figure 2 est une vue en perspective illustrant schématiquement le fonctionnement d'un exemple d'un mode de réalisation d'un viseur tête haute 200.

Le viseur tête haute 200 comprend une lame semi-transparente 201 destinée à être placée entre l'oeil d'un utilisateur 203 et une scène à observer (non représentée sur la figure 2). La lame 201 peut être placée selon un angle d'approximativement 45° par rapport à l'axe entre la scène à observer et l'observateur 203. Les modes de réalisation décrits ne se limitent toutefois pas à ce cas particulier.

Pour projeter une image vue à la même distance que l'image de la scène réelle et la superposer à celle-ci, un système de projection 207 est prévu. Le viseur tête haute 200 de la figure 2 se distingue du viseur tête haute 100 de la figure 1 principalement par son système de projection 207, plus simple et plus compact que le système de projection 107 de la figure 1.

Le système de projection 207 comprend un dispositif 209 d'affichage d'une image, adapté à générer un faisceau de projection d'image, par exemple collimaté à l'infini. Le dispositif 209 peut être un dispositif à petite pupille de sortie, par exemple de l'ordre de quelques centimètres carrés à quelques dizaines de centimètres carrés. A titre d'exemple, le dispositif 209 comprend un micro-projecteur à écran matriciel de type LCD ou OLED, adapté à générer une image rectangulaire de quelques dizaines de centimètres carrés. Les modes de réalisation décrits ne se limitent toutefois pas à ce cas particulier. Plus généralement, l'homme de l'art saura choisir d'autres dispositifs d'affichage d'image compatibles avec les modes de réalisation décrits, par exemple un projecteur à balayage laser.

Dans l'exemple de la figure 2, le système de projection 207 comprend un premier dispositif 211 d'extension de pupille de sortie, adapté à étendre la pupille de sortie du système dans une première direction, et un deuxième dispositif 231 d'extension de pupille de sortie couplé au dispositif 211, adapté à étendre la pupille de sortie du système dans une deuxième direction, par exemple approximativement orthogonale à la première direction.

Le dispositif d'extension de pupille de sortie 211 comprend une lame transparente 213, par exemple en verre. Dans cet exemple, les faces principales de la lame 213 sont approximativement rectangulaires et sont disposées dans des plans approximativement horizontaux. La face supérieure de la lame 213 est revêtue d'une couche 215 réfléchissante non transmissive, et la face inférieure de la lame 213 est revêtue d'une couche 217 partiellement réfléchissante et partiellement transmissive présentant un coefficient de transmission variant graduellement selon une direction d1 parallèle au plan de la face inférieure de la lame 213, la direction longitudinale de la lame 213 dans cet exemple (c'est-à-dire la direction parallèle au plus grand côté des faces inférieure et supérieure de la lame). La couche 215 peut être une couche métallique réfléchissante présentant une épaisseur suffisamment importante pour ne pas transmettre la lumière qu'elle reçoit, par exemple une épaisseur supérieure à 0,05 µm. La couche 217 peut être une couche métallique réfléchissante présentant une épaisseur suffisamment faible pour transmettre une partie de la lumière qu'elle reçoit, par exemple une épaisseur inférieure à 0,05 µm, dont l'épaisseur varie graduellement selon la direction d1. On notera que le coefficient de transmission de la couche 217 peut varier selon la direction d1 de façon progressive, c'est-à-dire de façon approximativement continue, ou par paliers.

Dans cet exemple, le dispositif d'extension de pupille de sortie 211 comprend en outre, au voisinage d'une extrémité de la lame 213, un dispositif d'entrée 219 permettant d'injecter dans la lame 213 un faisceau de projection d'image généré par l'élément d'affichage 209, avec un angle tel que ce faisceau se propage à l'intérieur de la lame 213, selon la direction d1, par réflexion alternativement sur les faces inférieure et supérieure de la lame 213, respectivement revêtues par les couches réfléchissantes 217 et 215. Dans l'exemple représenté, le dispositif d'entrée 219 est un prisme en un matériau transparent de même indice que la lame 213, dont une face est en contact avec une zone de la face supérieure de la lame 213 non revêtue par la couche 215, située au voisinage d'une extrémité de la lame 213, et dont une autre face tournée vers le dispositif d'affichage 209 est approximativement orthogonale à l'axe principal de projection du dispositif d'affichage 209. Les modes de réalisation décrits ne se limitent toutefois pas à ce cas particulier. Plus généralement, tout autre dispositif connu d'injection et d'orientation d'un faisceau lumineux dans une lame transparente peut être utilisé, par exemple un miroir placé à l'intérieur de la lame 213 et incliné par rapport aux plans des faces inférieure et supérieure de la lame.

Le fonctionnement du dispositif 211 est le suivant. Après son injection dans la lame 213, le faisceau lumineux de projection d'image émis par le dispositif d'affichage 209 se propage selon la direction générale de propagation d1, c'est-à-dire dans le sens de la longueur de la lame 213 dans cet exemple, par réflexion sur les faces inférieure et supérieure de la lame 213. A chaque réflexion du faisceau sur la face inférieure de la lame 213, une partie du faisceau n'est pas réfléchie par la couche 217 et est transmise par cette couche vers l'extérieur de la lame 213. Le coefficient de transmission de la lumière par la couche 217 augmente graduellement au fur et à mesure que l'on s'éloigne de l'entrée 219 du dispositif, de sorte que, lors des réflexions successives du faisceau de projection sur la couche 217, l'intensité lumineuse de la portion transmise du faisceau de projection soit toujours à peu près constante. Ainsi, du côté de sa face inférieure, le dispositif 211 émet un faisceau de projection d'image présentant une intensité lumineuse réduite par rapport au faisceau initialement émis par le dispositif d'affichage 209, mais dont la section a été étendue dans la direction d1. Le dispositif 211 réalise ainsi une extension de la pupille de sortie du système dans la direction d1.

On notera que le dispositif 211 peut avantageusement comporter, accolé à la couche 217 du côté de la couche 217 opposé à la lame 213, un élément transparent (non représenté), par exemple une couche, plaque, feuille ou lame transparente, de préférence de même indice optique que la lame 213 ou d'indice optique proche de celui de la lame 213, par exemple d'indice optique égal à mieux que 10 % près et de préférence à mieux que 5 % près à celui de la lame 213. Cet élément transparent permet avantageusement de bien maitriser les réflexions partielles du faisceau de projection sur la couche 217, et d'éviter que ces réflexions (maitrisées car indépendantes de l'angle d'incidence) ne soient perturbées par d'autres éventuelles réflexions (dépendantes de l'angle d'incidence) sur un dioptre optique à forte différence d'indice entre la lame 213 et le milieu situé du côté de la couche 217 opposé à la lame 213.

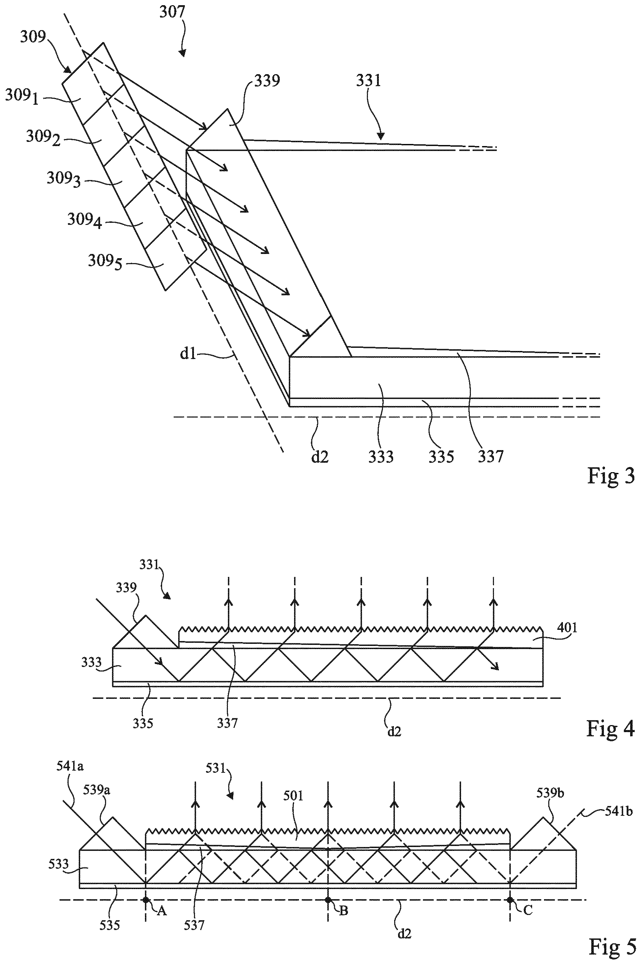

Le dispositif 211 peut en outre comporter un élément supplémentaire (non visible sur la figure 2) d'orientation du faisceau de sortie du dispositif 211, disposé du côté de la couche 217 opposé à la lame 213. A titre d'exemple, cet élément d'orientation est agencé de façon que l'axe principal du faisceau de projection d'image en sortie du dispositif 211 soit approximativement orthogonal à la face inférieure de la lame 213. Un exemple de réalisation d'un tel élément d'orientation du faisceau de sortie sera décrit plus en détail ci-après en relation avec la figure 4.

Le dispositif d'extension de pupille de sortie 231 comprend une lame transparente 233, par exemple en verre. Dans cet exemple, les faces principales de la lame 233 sont approximativement rectangulaires et sont disposées dans des plans approximativement horizontaux. Dans cet exemple, la largeur des faces rectangulaires inférieure et supérieure de la lame 233 est du même ordre de grandeur que la longueur des faces rectangulaires inférieure et supérieure de la lame 213 du dispositif 211, et la lame 233 est disposée sous le dispositif 211 et orientée de façon que la direction longitudinale de la lame 233 soit approximativement orthogonale à la direction longitudinale de la lame 213. Dans cet exemple, la face inférieure du dispositif 211 est située, en projection verticale, au-dessus d'une zone de la face supérieure de la lame 233 voisine d'une extrémité de la lame 233.

La face inférieure de la lame 233 est revêtue d'une couche 235 réfléchissante non transmissive, et la face supérieure de la lame 233 est revêtue d'une couche 237 partiellement réfléchissante et partiellement transmissive présentant un coefficient de transmission variant graduellement selon une direction d2 parallèle au plan de la face supérieure de la lame 233, la direction longitudinale de la lame 233 dans cet exemple. La couche 235 peut être une couche métallique réfléchissante présentant une épaisseur suffisamment importante pour ne pas transmettre la lumière qu'elle reçoit. La couche 237 peut être une couche métallique réfléchissante présentant une épaisseur suffisamment faible pour transmettre une partie de la lumière qu'elle reçoit, et dont l'épaisseur varie graduellement selon la direction d2. Le coefficient de transmission de la couche 237 peut varier selon la direction d2 de façon progressive, ou par paliers.

On notera que dans l'exemple représenté, la couche 237 ne revêt pas la zone de la face supérieure de la lame 233 située en regard de la face inférieure du dispositif 211.

Dans cet exemple, le dispositif d'extension de pupille de sortie 231 comprend un dispositif d'entrée 239 permettant d'injecter dans la lame transparente 233 un faisceau de projection d'image en provenance de la face inférieure du dispositif 211, avec un angle tel que ce faisceau se propage à l'intérieur de la lame 233 selon la direction d2, par réflexion alternativement sur les faces inférieure et supérieure de la lame 233, respectivement revêtues par les couches réfléchissantes 235 et 237. A titre d'exemple, le dispositif d'entrée 239 peut comprendre une couche transparente revêtant la zone de la face supérieure de la lame 233 non revêtue par la couche 237, cette couche transparente comportant, du côté de sa face supérieure, des stries (non représentées) formant des prismes adaptés à dévier le faisceau de projection d'image en provenance de la face inférieure du dispositif 211. Les modes de réalisation décrits ne se limitent toutefois pas à ce cas particulier. Plus généralement, tout autre dispositif connu d'injection et d'orientation d'un faisceau lumineux dans une lame transparente peut être utilisé pour coupler le dispositif 211 au dispositif 231.

Le fonctionnement du dispositif 231 est similaire au fonctionnement du dispositif 211. Après son injection dans la lame 233, le faisceau lumineux de projection d'image se propage à l'intérieur de la lame 233 selon la direction d2 (c'est-à-dire dans le sens de la longueur de la lame dans cet exemple), par réflexion sur les faces inférieure et supérieure de la lame 233. A chaque réflexion du faisceau sur la face supérieure de la lame 233, une partie du faisceau n'est pas réfléchie par la couche 237 et est transmise par cette couche vers l'extérieur de la lame 233. Le coefficient de transmission de la lumière par la couche 237 augmente graduellement au fur et à mesure que l'on s'éloigne de l'entrée 239 du dispositif, de sorte que, lors des réflexions successives du faisceau de projection sur la couche 237, l'intensité lumineuse de la portion transmise du faisceau de projection soit toujours à peu près constante. Ainsi, du côté de sa face inférieure, le dispositif 231 émet un faisceau de projection d'image présentant une intensité lumineuse réduite par rapport au faisceau initialement injecté dans la lame via le dispositif d'entrée 239, mais dont la section a été étendue dans la direction d2. Le dispositif 231 réalise ainsi une extension de la pupille de sortie du système dans la direction d2 (approximativement orthogonale à la direction d1 dans cet exemple).

On notera que le dispositif 231 peut avantageusement comporter, accolé à la couche 237 du côté de la couche 237 opposé à la lame 233, un élément transparent (non représenté), par exemple une couche, plaque, feuille ou lame transparente, de préférence de même indice optique que la lame 233 ou d'indice optique proche de celui de la lame 233, par exemple d'indice optique égal à mieux que 10 % près et de préférence à mieux que 5 % près à celui de la lame 233. Cet élément transparent permet avantageusement de bien maitriser les réflexions partielles du faisceau de projection sur la couche 237, et d'éviter que ces réflexions ne soient perturbées par d'autres réflexions sur un dioptre optique entre la lame 233 et le milieu situé du côté de la couche 237 opposé à la lame 233.

Le dispositif 231 peut en outre comporter un élément supplémentaire (non visible sur la figure 2) d'orientation du faisceau de sortie du dispositif 231, disposé du côté de la couche 237 opposé à la lame 233. A titre d'exemple, cet élément d'orientation est agencé de façon que l'axe principal du faisceau de projection d'image en sortie du dispositif 231 soit approximativement orthogonal à la face supérieure de la lame 233.

Un avantage du système de projection 207 de la figure 2 est qu'il est particulièrement simple et compact, combinant un élément d'affichage 209 de petites dimensions avec un dispositif d'extension de pupille de sortie 211-231 simple et peu encombrant par rapport aux dispositifs d'extension de pupille de sortie conventionnels à lentilles sphériques.

Le système de projection 207 est par exemple disposé de façon que le faisceau issu du deuxième dispositif d'extension de pupille de sortie 231 atteigne la lame semi-transparente 201, côté observateur 203, approximativement perpendiculairement à l'axe entre la scène réelle et l'observateur 203. Le faisceau de projection d'image atteint ainsi la lame semi-transparente 201 avec un angle d'approximativement 45 degrés dans cet exemple, et la lame réfléchit une partie du faisceau de projection d'image en direction de l'observateur. La lame semi-transparente 201 combine l'image de la scène réelle et l'image issue du système de projection 207, d'où il résulte que l'observateur 203 visualise une image comprenant l'image projetée superposée à l'image de la scène réelle.

Un avantage du viseur tête haute 200 de la figure 2 est qu'il présente à la fois une grande pupille de sortie et un encombrement réduit, satisfaisant ainsi à deux contraintes importantes du domaine des viseurs tête haute.

La figure 3 est une vue en perspective illustrant schématiquement une variante de réalisation du système de projection d'image de la figure 2. Le système de projection 307 de la figure 3 peut par exemple être utilisé en remplacement du système de projection 207, dans le viseur tête haute de la figure 2.

Le système de projection d'image 307 comprend un dispositif 309 d'affichage d'une image, adapté à générer un faisceau de projection d'image, par exemple collimaté à l'infini. Le dispositif d'affichage 309 de la figure 3 présente une pupille de sortie du même ordre de grandeur que celle du dispositif 209 dans la direction d2, mais déjà étendue dans la direction d1 par rapport au dispositif 209. Le dispositif d'affichage 309 est couplé à un dispositif 331 d'extension de pupille de sortie, adapté à étendre la pupille de sortie du système dans la direction d2.

Pour obtenir un dispositif d'affichage 309 compact et présentant une pupille de sortie importante dans la direction d1, on prévoit de dissocier le dispositif d'affichage en plusieurs sous-dispositifs d'affichage élémentaires, cinq sous-dispositifs 309i avec i entier allant de 1 à 5 dans cet exemple, alignés dans la direction d1. Les sous-dispositifs d'affichage 309i sont par exemple du même type que le dispositif d'affichage 209 de la figure 2. A titre d'exemple, chaque sous-dispositif d'affichage 309i est prévu pour afficher la totalité de l'image à projeter. Le dispositif d'affichage 309 peut en outre comprendre un système optique (non représenté) agencé pour combiner les faisceaux de projection d'image émis par les différents sous-dispositifs d'affichage 309i, en un faisceau présentant une grande pupille de sortie dans la direction d1. La réalisation d'un dispositif d'affichage compact à grande pupille de sortie par combinaison de plusieurs sous-dispositifs d'affichage est par exemple décrite dans la demande de brevet français intitulée "Viseur tête haute compact à faible consommation d'énergie" déposée à l'INPI par la demanderesse le 30 avril 2012 sous le numéro 1253971.

Dans cet exemple, le dispositif d'extension de pupille de sortie 331 comprend une lame transparente 333, par exemple en verre, dont les faces principales sont approximativement rectangulaires et sont disposées dans des plans approximativement horizontaux. Dans cet exemple, la largeur des faces rectangulaires inférieure et supérieure de la lame 333 est du même ordre de grandeur que la plus grande longueur de la section transversale du faisceau de projection d'image émis par le dispositif 309, et la lame 333 est orientée de façon que sa direction longitudinale soit approximativement orthogonale à la direction longitudinale du dispositif 309.

La face inférieure de la lame 333 est revêtue d'une couche 335 réfléchissante non transmissive, et la face inférieure de la lame 333 est revêtue d'une couche 337 partiellement réfléchissante et partiellement transmissive présentant un coefficient de transmission variant graduellement selon la direction d2 (la direction longitudinale de la lame 333 dans cet exemple). La couche 335 peut être une couche métallique réfléchissante présentant une épaisseur suffisamment importante pour ne pas transmettre la lumière qu'elle reçoit, et la couche 337 peut être une couche métallique réfléchissante présentant une épaisseur suffisamment faible pour transmettre une partie de la lumière qu'elle reçoit, et dont l'épaisseur varie graduellement selon la direction d2. Le coefficient de transmission de la couche 337 peut varier selon la direction d2 soit de façon progressive, soit par paliers.

Dans cet exemple, le dispositif 331 comprend en outre un dispositif d'entrée 339 permettant d'injecter dans la lame transparente 333 un faisceau de projection d'image généré par le dispositif d'affichage 309, avec un angle tel que ce faisceau se propage à l'intérieur de la lame 333, selon la direction d2, par réflexion alternativement sur les faces inférieure et supérieure de la lame 333, respectivement revêtues par les couches réfléchissantes 335 et 337. Dans l'exemple représenté, le dispositif d'entrée 339 est un prisme en un matériau transparent de même indice que la lame 333, dont une face est en contact avec une zone de la face supérieure de la lame 333 non revêtue par la couche 337, située au voisinage d'une extrémité de la lame 333, et dont une autre face tournée vers le dispositif d'affichage 309 est approximativement orthogonale à l'axe principal de projection du dispositif d'affichage 309. Les modes de réalisation décrits ne se limitent toutefois pas à ce cas particulier. Plus généralement, tout autre dispositif connu d'injection et d'orientation d'un faisceau lumineux dans une lame transparente peut être utilisé.

Le fonctionnement du dispositif 331 est le suivant. Après son injection dans la lame 333, le faisceau lumineux de projection d'image émis par le dispositif d'affichage 309 se propage dans la lame 333 selon la direction d2, par réflexion sur les faces inférieure et supérieure de la lame 333. A chaque réflexion du faisceau sur la face supérieure de la lame 333, une partie du faisceau n'est pas réfléchie par la couche 337 et est transmise par cette couche vers l'extérieur de la lame 333. Le coefficient de transmission de la lumière par la couche 337 augmente graduellement au fur et à mesure que l'on s'éloigne de l'entrée 339 du dispositif, de façon que, lors des réflexions successives du faisceau de projection sur la couche 337, l'intensité lumineuse de la portion transmise du faisceau de projection soit toujours à peu près constante. Ainsi, du côté de sa face inférieure, le dispositif 331 émet un faisceau de projection d'image présentant une intensité lumineuse réduite par rapport au faisceau initialement émis par le dispositif d'affichage 309, mais dont la section a été étendue dans la direction d2. Le dispositif 331 réalise ainsi une extension de la pupille de sortie du système dans la direction d2.

On notera que le dispositif 331 peut avantageusement comporter, accolé à la couche 337 du côté de la couche 337 opposé à la lame 333, un élément transparent (non représenté), par exemple une couche, plaque, feuille ou lame transparente, de préférence de même indice optique que la lame 333 ou d'indice optique proche de celui de la lame 333, par exemple d'indice optique égal à mieux que 10 % près et de préférence à mieux que 5 % près à celui de la lame 333. Cet élément transparent permet avantageusement de bien maitriser les réflexions partielles du faisceau de projection sur la couche 337, et d'éviter que ces réflexions ne soient perturbées par d'autres réflexions sur un dioptre optique entre la lame 333 et le milieu situé du côté de la couche 337 opposé à la lame 333.

Le dispositif 331 peut en outre comporter un élément supplémentaire (non visible sur la figure 3) d'orientation du faisceau de sortie du dispositif 331, disposé du côté de la couche 337 opposé à la lame 333. A titre d'exemple, cet élément d'orientation est agencé de façon que l'axe principal du faisceau de projection d'image en sortie du dispositif 331 soit approximativement orthogonal à la face supérieure de la lame 333.

Un avantage du système de projection 307 de la figure 3 est qu'il permet de fournir un faisceau de sortie de plus forte intensité lumineuse que le système 207 de la figure 2 (à luminances identiques des faisceaux d'entrée émis par les dispositifs d'affichage 209 et 309), dans la mesure où, dans le dispositif 307, le faisceau de projection d'image ne traverse qu'un seul dispositif d'extension de pupille de sortie à couche partiellement réfléchissante et partiellement transmissive, contre deux dans le système de la figure 2.

La figure 4 est une vue en coupe longitudinale de côté illustrant plus en détail le dispositif d'extension de pupille de sortie 331 de la figure 3. Sur la figure 4, on a représenté, en plus des éléments déjà représentés en figure 3, un élément 401 d'orientation du faisceau de sortie du dispositif. L'élément 401 est disposé du côté de la couche 337 opposé à la lame 333. Dans cet exemple, l'élément 401 est une plaque, feuille, couche ou film en un matériau transparent, dont une face inférieure approximativement plane est en contact avec la face supérieure de la couche 337, et dont la face supérieure (opposée à la couche 337) comprend des stries à section triangulaire définissant des prismes adaptés à dévier le faisceau de sortie du dispositif 331. L'élément 401 est de préférence mais pas nécessairement en un matériau de même indice de réfraction que la lame 333. A titre d'exemple l'élément 401 a un indice optique égal à mieux que 10 % près et de préférence à mieux que 5% près à celui de la lame 333. Ceci permet avantageusement de bien maitriser les réflexions partielles du faisceau de projection sur la couche 337, et d'éviter que ces réflexions ne soient perturbées par d'autres réflexions sur un dioptre optique entre la lame 333 et le milieu situé du côté de la couche 337 opposé à la lame 333.

Le fonctionnement de l'élément d'orientation 401 est le suivant. Comme cela a été expliqué ci-dessus, en fonctionnement, un faisceau lumineux de projection d'image se propage dans la lame 333 par réflexion alternativement sur les faces inférieure et supérieure de la lame 333. A chaque réflexion du faisceau sur la face supérieure de la lame 333, une partie du faisceau n'est pas réfléchie par la couche 337 et est transmise par cette couche vers l'extérieur de la lame 333. La portion transmise du faisceau poursuit alors sa trajectoire dans l'élément 401, en direction de la face supérieure de l'élément 401 (sans être déviée si l'indice de réfraction de l'élément 401 est identique à celui de la lame 333). Lorsque la lumière transmise atteint la face supérieure de l'élément 401, elle est alors déviée par les prismes formés sur cette face, d'un angle qui dépend notamment de l'orientation des faces latérales des prismes.

Des éléments d'orientation similaires ou identiques à l'élément 401 de la figure 4 peuvent être prévus dans le système de projection de la figure 2, du côté de la face supérieure du dispositif 231, et/ou du côté de la face inférieure du dispositif 211.

On notera que dans tous les modes de réalisation décrits dans la présente demande, si l'angle d'incidence du faisceau de projection se propageant dans la lame transparente est inférieur à l'angle critique de réflexion totale interne dans la lame, la portion du faisceau de projection non réfléchie par la couche partiellement réfléchissante peut sortir du dispositif même en l'absence d'un élément d'orientation du type décrit en relation avec la figure 4. Un tel élément d'orientation peut malgré tout être prévu pour contrôler l'angle de sortie du faisceau, mais cet élément est alors optionnel. En revanche, si l'angle d'incidence du faisceau de projection est supérieur ou égal à l'angle critique de réflexion totale interne dans la lame, il convient de prévoir un élément d'orientation du type décrit en relation avec la figure 4, pour extraire du dispositif la lumière non réfléchie par la couche partiellement réfléchissante, et empêcher que cette lumière ne subisse une réflexion totale sur la face de la lame transparente revêtue par la couche partiellement réfléchissante.

On notera de plus que les modes de réalisation décrits ne se limitent pas au cas où l'élément d'orientation est un élément à base de prismes du type décrit en relation avec la figure 4. Tout autre élément adapté à remplir les mêmes fonctions d'orientation et/ou d'extraction du faisceau de sortie peut être prévu, par exemple un hologramme ou un réseau en dent de scie, parfois appelé réseau blazé ou réseau à échelettes, adapté pour avoir une transmission optimale à un ordre particulier (ordre 1 par exemple). Ainsi, l'élément 401 peut être une couche dont la face opposée à la couche 337 est structurée et forme un réseau de diffraction adapté à favoriser l'extraction de la lumière vers l'extérieur du dispositif.

La figure 5 est une vue en coupe longitudinale de côté illustrant plus en détail une variante de réalisation d'un dispositif d'extension de pupille de sortie 531.

Le dispositif 531 comprend une lame transparente 533, par exemple en verre. Dans cet exemple, les faces principales de la lame 533 sont approximativement rectangulaires et sont disposées dans des plans approximativement horizontaux. Dans cet exemple, la face inférieure de la lame 533 est revêtue d'une couche 535 réfléchissante non transmissive, et la face supérieure de la lame 533 est revêtue d'une couche 537 partiellement réfléchissante et partiellement transmissive présentant un coefficient de transmission variant graduellement selon une direction d2 parallèle au plan de la face supérieure de la lame, la direction longitudinale de la lame 533 dans cet exemple. La couche 535 peut être une couche métallique réfléchissante présentant une épaisseur suffisamment importante pour ne pas transmettre la lumière qu'elle reçoit. La couche 537 peut être une couche métallique réfléchissante présentant une épaisseur suffisamment faible pour transmettre une partie de la lumière qu'elle reçoit, et dont l'épaisseur varie graduellement selon la direction d2. Le coefficient de transmission de la couche 537 peut varier progressivement, ou par paliers.

Dans l'exemple de la figure 5, la couche 537 présente un coefficient de transmission de la lumière décroissant graduellement selon la direction d2 depuis un point A, situé au voisinage d'une première extrémité de la lame, jusqu'à un point B situé approximativement à mi-longueur de la lame, puis croissant graduellement selon la direction d2 depuis le point B, jusqu'à un point C situé au voisinage d'une deuxième extrémité de la lame opposée à la première extrémité.

Dans l'exemple de la figure 5, le dispositif d'extension de pupille de sortie 531 comprend en outre :
un premier dispositif d'entrée 539a, par exemple un prisme, permettant d'injecter dans la lame transparente 533 un premier faisceau 541a de projection d'image au voisinage de sa première extrémité (côté point A), avec un angle tel que ce faisceau se propage à l'intérieur de la lame selon la direction d2, par réflexion alternativement sur les faces inférieure et supérieure de la lame ; et
un deuxième dispositif d'entrée 539b, par exemple un prisme, permettant d'injecter dans la lame transparente 533 un deuxième faisceau 541b de projection d'image au voisinage de sa deuxième extrémité (côté point B), avec un angle tel que ce faisceau se propage à l'intérieur de la lame selon la direction d2, par réflexion alternativement sur les faces inférieure et supérieure de la lame.

On notera que le dispositif 531 peut avantageusement comporter, accolé à la couche 537 du côté de la couche 537 opposé à la lame 533, un élément transparent (non représenté), par exemple une couche, plaque, feuille ou lame transparente, de préférence de même indice optique que la lame 533 ou d'indice optique proche de celui de la lame 533, par exemple d'indice optique égal à mieux que 10 % près et de préférence à mieux que 5 % près à celui de la lame 533. Cet élément transparent permet avantageusement de bien maitriser les réflexions partielles du faisceau de projection sur la couche 537, et d'éviter que ces réflexions ne soient perturbées par d'autres réflexions sur un dioptre optique entre la lame 533 et le milieu situé du côté de la couche 537 opposé à la lame 533.

Le dispositif 531 peut en outre optionnellement comprendre un élément 501 d'orientation du faisceau de sortie du dispositif, disposé du côté de la couche 537 opposé à la lame 533, par exemple un élément d'orientation du type décrit en relation avec la figure 4.

En fonctionnement, une même image peut être injectée à l'intérieur de la lame 533 simultanément par deux dispositifs d'affichage distincts ou par deux systèmes de projection distincts (non représentés), via les dispositifs d'entrée 539a et 539b.

On veillera à positionner et orienter les faisceaux de projection émis par les dispositifs 539a et 539b de façon que, en sortie du dispositif de la figure 5, les rayons correspondant à un même pixel de l'image projetée sortent avec un même angle, que ces rayons proviennent du dispositif 539a ou qu'ils proviennent du dispositif 539b.

Un avantage du dispositif de la figure 5 est qu'il permet d'augmenter l'intensité lumineuse de sortie par rapport à un dispositif à une seule entrée du type décrit en relation avec les figures 2, 3 ou 4.

Un autre avantage est que la réalisation de la couche partiellement réfléchissante et partiellement transmissive du dispositif d'extension de pupille de sortie de la figure 5 est plus simple que dans les dispositifs à une seule entrée du type décrit en relation avec les figures 2, 3 et 4. En effet, dans le dispositif de la figure 5, pour une même distance parcourue par le faisceau de projection d'image à l'intérieur de la lame transparente, le pas ou la pente de variation du coefficient de transmission de la couche partiellement réfléchissante et partiellement transmissive peut être plus important que dans les dispositifs à une seule entrée, ce qui rend la réalisation de cette couche plus aisée.

A titre de variante avantageuse car particulièrement simple à réaliser, la couche 537 peut être une couche partiellement réfléchissante et partiellement transmissive présentant un coefficient de transmission uniforme sur toute la surface du dispositif. Dans ce cas, l'intensité moyenne transmise par le dispositif n'est pas uniforme, mais on peut par exemple obtenir, pour une image d'intensité uniforme projetée en entrée du dispositif, une image de sortie présentant des différences d'intensité n'excédant pas 20 %, ce qui est suffisant pour de nombreuses applications.

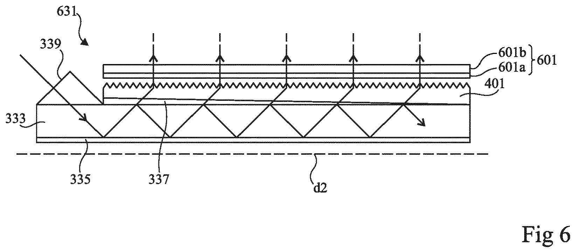

La figure 6 est une vue en coupe longitudinale de côté illustrant une variante de réalisation du dispositif d'extension de pupille de sortie de la figure 4. Le dispositif d'extension de pupille de sortie 631 de la figure 6 comprend les mêmes éléments que le dispositif d'extension de pupille de sortie 331 de la figure 4. Le dispositif 631 comprend en outre, du côté de l'élément 401 d'orientation du faisceau de sortie opposé à la couche 337, une lame quart d'onde 601a et, du côté de la lame 601a opposé à l'élément 401, un polariseur rectiligne 601b. L'ensemble 601 formé par la lame quart d'onde 601a et par le polariseur 601b permet de filtrer d'éventuelles réflexions parasites, sur la face supérieure de la couche 337, de lumière provenant de l'extérieur du système, par exemple du soleil.

Des modes de réalisation particuliers ont été décrits. Diverses variantes et modifications apparaîtront à l'homme de l'art.

En particulier, dans les modes de réalisation décrits ci-dessus de dispositifs d'extension de pupille de sortie à couche partiellement réfléchissante et partiellement transmissive, si l'angle d'incidence du faisceau projeté dans la lame transparente est supérieur ou égal à l'angle critique de réflexion totale interne de la lumière dans la lame, la couche réfléchissante non transmissive (respectivement 215 et 235 en figure 2, et 335 en figures 3 et 4) revêtant la face de la lame transparente opposée à la couche partiellement réfléchissante est optionnelle.

De plus, les modes de réalisation décrits ne se limitent pas aux exemples susmentionnés d'agencements de dispositifs d'extension de pupille de sortie à couche partiellement réfléchissante et partiellement transmissive dans des systèmes de projection. En fonction des diverses contraintes du système de projection considéré (orientation de faisceau d'entrée, orientation souhaitée du faisceau de sortie, etc.), l'homme de l'art saura prévoir d'autres agencements.

De plus, dans les exemples de dispositifs d'extension de pupille de sortie décrits en relation avec les figures 2 à 6, l'injection du faisceau de projection d'image dans la lame transparente du dispositif est réalisée par la face supérieure de la lame transparente. Les modes de réalisation décrits ne se limitent pas à ce cas particulier. A titre d'exemple, l'homme de l'art saura adapter les dispositifs décrits pour effectuer l'injection du faisceau de projection dans la lame transparente via la face inférieure de la lame transparente. Plus généralement, l'injection peut être effectuée soit du côté comportant la couche partiellement réfléchissante et partiellement transmissive du dispositif, soit de l'autre côté, en fonction des diverses contraintes pratiques du dispositif (encombrement, etc.).

De plus, les modes de réalisation décrits de systèmes de projection d'image ne se limitent pas à une utilisation dans des viseurs tête haute et peuvent être utilisés dans d'autres applications.

En outre, les modes de réalisation décrits de systèmes d'extension de pupille de sortie à couche partiellement réfléchissante et partiellement transmissive ne se limitent pas à une utilisation dans des systèmes de projection d'image mais peuvent être utilisés dans d'autres applications.

## Revendications

1. Dispositif optique (211, 231 ; 331 ; 531 ; 631) comportant :
une lame transparente (213, 233 ; 333 ; 533) dont une première face est réfléchissante ;
une première couche (217, 237 ; 337 ; 537) partiellement réfléchissante et partiellement transmissive revêtant une deuxième face de la lame transparente (213, 233 ; 333 ; 533) opposée à la première face ; et
une deuxième couche (401 ; 501) revêtant la face de la première couche (217, 237 ; 337 ; 537) opposée à la lame transparente (213, 233 ; 333 ; 533), la deuxième couche (401) étant en un matériau dont l'indice optique diffère de l'indice optique de la lame transparente (213, 233 ; 333 ; 533) de moins que 10 % et de préférence de moins que 5 %, et la deuxième couche (401) comportant, sur sa face opposée à la première couche (217, 237 ; 337 ; 537), des structurations formant un réseau de diffraction adapté à favoriser l'extraction de lumière vers l'extérieur de la lame transparente, le dispositif optique étant **caractérisé en ce que** la première couche (217, 237 ; 337 ; 537) présente un coefficient de transmission variant graduellement selon au moins une direction (d1, d2) parallèle au plan de la deuxième face.

2. Dispositif (211, 231 ; 331 ; 531 ; 631) selon la revendication 1, dans lequel la première face de la lame transparente (213, 233 ; 333 ; 533) est revêtue d'une couche (215, 235 ; 335 ; 535) réfléchissante non transmissive.

3. Dispositif (211, 231 ; 331 ; 531 ; 631) selon la revendication 1 ou 2, dans lequel la deuxième couche (401 ; 501) comporte, du côté de sa face opposée à la première couche (217, 237 ; 337 ; 537), des stries à section triangulaire définissant des prismes.

4. Dispositif (211, 231 ; 331 ; 531 ; 631) selon l'une quelconque des revendications 1 à 3, dans lequel la deuxième couche (401 ; 501) comprend, du côté de sa face opposée à la première couche (217, 237 ; 337 ; 537), des structurations formant un réseau à échelettes ou réseau blazé.

5. Dispositif (211, 231 ; 331 ; 531 ; 631) selon l'une quelconque des revendications 1 à 4, dans lequel la première couche (217, 237 ; 337 ; 537) est une couche métallique.

6. Dispositif (211, 231 ; 331 ; 531 ; 631) selon l'une quelconque des revendications 1 à 5, comportant en outre au moins un dispositif (219, 239 ; 339 ; 539a, 539b) d'injection d'un faisceau lumineux de projection d'image dans la lame transparente.

7. Dispositif (211, 231 ; 331 ; 631) selon la revendication 6, dans lequel ledit au moins un dispositif d'injection (219, 239 ; 339) est situé à une première extrémité de la lame transparente (213, 233 ; 333), et dans lequel le coefficient de transmission de la première couche (217, 237 ; 337) augmente graduellement entre ladite première extrémité et une deuxième extrémité de la lame transparente opposée à la première extrémité.

8. Dispositif (531) selon la revendication 6, comportant deux dispositifs d'injection (539a, 539b) situés à des extrémités opposées de la lame transparente (533), dans lequel le coefficient de transmission de la première couche (537) augmente graduellement entre chacune desdites extrémités et une région centrale de la lame transparente.

9. Système de projection (207 ; 307) comportant un dispositif (209 ; 309) d'affichage d'une image, et au moins un dispositif optique (211, 231 ; 331 ; 531 ; 631) selon l'une quelconque des revendications 1 à 8.

10. Système (207) selon la revendication 9, comportant un premier dispositif optique (211) selon l'une quelconque des revendications 1 à 8, et un deuxième dispositif optique (231) selon l'une quelconque des revendications 1 à 8, dans lequel ladite au moins une direction (d1) du premier dispositif (211) est orthogonale à ladite au moins une direction (d2) du deuxième dispositif (231).

11. Viseur tête haute (200) comportant un système de projection (207 ; 307) selon la revendication 9 ou 10, et une lame semi-transparente (201) adaptée à combiner une image projetée par le système de projection (207 ; 307) avec une image d'une scène réelle.

## Patentansprüche

1. Optische Vorrichtung (211, 231; 331; 531; 631), die Folgendes aufweist:
eine transparente Platte (213, 233; 333; 533) mit einer ersten reflektierenden Oberfläche;
eine erste teilweise reflektierende und teilweise durchlässige Schicht (217, 237; 337; 537), die eine zweite Oberfläche der transparenten Platte (213, 233; 333; 533) entgegengesetzt zu der ersten Oberseite abdeckt; und
eine zweite Schicht (401; 501), die die Oberseite der ersten Schicht (217, 237; 337; 537) entgegengesetzt zu der transparenten Platte (213, 233; 333; 533) abdeckt, wobei die zweite Schicht (401) aus einem Material hergestellt ist, dessen optischer Index sich von dem optischen Index der transparenten Platte (213, 233; 333; 533) um weniger als 10% und vorzugsweise um weniger als 5% unterscheidet, und die zweite Schicht (401) auf ihrer Oberfläche entgegengesetzt zu der ersten Schicht (217, 237; 337; 537) Strukturen aufweist, die ein Beugungsgitter bilden, das geeignet ist, um die Lichtextraktion zur Außenseite der transparenten Platte hin zu fördern,
wobei die optische Vorrichtung **dadurch gekennzeichnet ist, dass** die erste Schicht (217, 237; 337; 537) einen Transmissionskoeffizienten aufweist, der graduell entlang einer Richtung (d1, d2) parallel zu der Ebene der zweiten Oberfläche variiert.

2. Vorrichtung (211, 231; 331; 531; 631) nach Anspruch 1, wobei die erste Oberfläche der transparenten Platte (213, 233; 333; 533) mit einer nichtdurchlässigen reflektierenden Schicht (215, 235; 335; 535) abgedeckt ist.

3. Vorrichtung (211, 231; 331; 531; 631) nach Anspruch 1 oder 2, wobei die zweite Schicht (401; 501) auf der Seite ihrer Oberfläche entgegengesetzt zu der ersten Schicht (217, 237; 337; 537) Nuten mit dreieckigem Schnitt, die Prismen definieren, aufweist.

4. Vorrichtung (211, 231; 331; 531; 631) nach einem der Ansprüche 1 bis 3, wobei die zweite Schicht (401; 501) auf der Seite ihrer Oberfläche entgegengesetzt zu der ersten Schicht (217, 237; 337; 537) Strukturen, die ein Echelette-Gitter oder Blaze-Gitter bilden, aufweist.

5. Vorrichtung (211, 231; 331; 531; 631) nach einem der Ansprüche 1 bis 4, wobei die erste Schicht (217, 237; 337; 537) eine Metallschicht ist.

6. Vorrichtung (211, 231; 331; 531; 631) nach einem der Ansprüche 1 bis 5, die ferner wenigstens eine Vorrichtung (219, 239; 339; 539a, 539b) zum Injizieren eines Bildprojektionslichtstrahls in die transparente Platte aufweist.

7. Vorrichtung (211, 231; 331; 631) nach Anspruch 6, wobei die wenigstens eine Injektionsvorrichtung (219, 239; 339) an einem ersten Ende der transparenten Platte (213, 233; 333) angeordnet ist. und wobei sich der Transmissionskoeffizient der ersten Schicht (217, 237; 337) zwischen dem ersten Ende und einem dem ersten Ende entgegengesetzten zweiten Ende der transparenten Platte graduell erhöht.

8. Vorrichtung (531) nach Anspruch 6, die zwei Injektionsvorrichtungen (539a, 539b) aufweist, die an entgegengesetzten Enden der transparenten Platte (533) angeordnet sind, wobei sich der Transmissionskoeffizient der ersten Schicht (537) zwischen jedem der Enden und einem zentralen Bereich der transparenten Platte graduell erhöht.

9. Projektionssystem (207; 307), das eine Bildanzeigevorrichtung (209; 309) und wenigstens eine optische Vorrichtung (211; 231; 331; 531; 631) nach einem der Ansprüche 1 bis 8 aufweist.

10. System (207) nach Anspruch 9, das eine erste optische Vorrichtung (211) nach einem der Ansprüche 1 bis 8 und eine zweite optische Vorrichtung (231) nach einem der Ansprüche 1 bis 8 aufweist, wobei die wenigstens eine Richtung (d1) der ersten Vorrichtung (211) orthogonal zu der wenigstens einen Richtung (d2) der zweiten Vorrichtung (231) ist.

11. Head-up-Display (200), das das Projektionssystem (207; 307) nach Anspruch 9 oder 10 und einen Strahlenteiler (201) aufweist, der geeignet ist, um ein von dem Projektionssystem (207; 307) projiziertes Bild mit einem Bild einer realen Szene zu kombinieren.

## Claims

1. An optical device (211, 231; 331; 531; 631) comprising:
a transparent plate (213, 233; 333; 533) having a first reflective surface;
a first partially reflective and partially transmissive layer (217, 237; 337; 537) coating a second surface of the transparent plate (213, 233; 333; 533) opposite to the first surface; and
a second layer (401; 501) coating the surface of the first layer (217, 237; 337; 537) opposite to the transparent plate (213, 233; 333; 533), the second layer (401) being made of a material having its optical index differing from the optical index of the transparent plate (213, 233; 333; 533) by less than 10% and preferably by less than 5%, and the second layer (401) comprising, on its surface opposite to the first layer (217, 237; 337; 537), structures forming a diffraction grating capable of promoting the extraction of light to the outside of the transparent plate,
the optical device being **characterized in that** the first layer (217, 237; 337; 537) has a transmission coefficient gradually varying along at least one direction (d1, d2) parallel to the plane of the second surface.

2. The device (211, 231; 331; 531; 631) of claim 1, wherein the first surface of the transparent plate (213, 233; 333; 533) is coated with a non-transmissive reflective layer (215, 235; 335; 535).

3. The device (211, 231; 331; 531; 631) of claim 1 or 2, wherein the second layer (401; 501) comprises, on the side of its surface opposite to the first layer (217, 237; 337; 537), grooves of triangular section defining prisms.

4. The device (211, 231; 331; 531; 631) of any of claims 1 to 3, wherein the second layer (401; 501) comprises, on the side of its surface opposite to the first layer (217, 237; 337; 537), structures forming an echelette grating or blazed grating.

5. The device (211, 231; 331; 531; 631) of any of claims 1 to 4, wherein the first layer (217, 237; 337; 537) is a metal layer.

6. The device (211, 231; 331; 531; 631) of any of claims 1 to 5, further comprising at least one device (219, 239; 339; 539a, 539b) of injection of an image projection light beam into the transparent plate.

7. The device (211, 231; 331; 631) of claim 6, wherein said at least one injection device (219, 239; 339) is located at a first end of the transparent plate (213, 233; 333), and wherein the transmission coefficient of the first layer (217, 237; 337) gradually increases between the first end and a second end of the transparent plate opposite to the first end.

8. The device (531) of claim 6, comprising two injection devices (539a, 539b) located at opposite ends of the transparent plate (533), wherein the transmission coefficient of the first layer (537) gradually increases between each of the ends and a central region of the transparent plate.

9. A projection system (207; 307) comprising an image display device (209; 309) and at least one optical device (211, 231; 331; 531; 631) of any of claims 1 to 8.

10. The system (207) of claim 9, comprising a first optical device (211) of any of claims 1 to 8, and a second optical device (231) of any of claims 1 to 8, wherein said at least one direction (d1) of the first device (211) is orthogonal to said at least one direction (d2) of the second device (231).

11. A head-up display (200) comprising the projection system (207; 307) of claim 9 or 10, and a beam splitter (201) capable of combining an image projected by the projection system (207; 307) with an image of a real scene.
